# EUROPÄISCHE PATENTSCHRIFT

(11) **EP 1 265 775 B1**
(45) Veröffentlichungstag und Bekanntmachung des Hinweises auf die Patenterteilung: **25.04.2007**
(21) Anmeldenummer: 01916911.9
(22) Anmeldetag: 08.03.2001
(51) Int. Cl.: B60S 1/54

(54) **EINRICHTUNG ZUM SAUBERHALTEN OPTISCHER ELEMENTE IN KRAFTFAHRZEUGEN, INSBESONDERE VON SENSOR- ODER KAMERA-ABDECKUNGEN**
DEVICE FOR KEEPING OPTICAL ELEMENTS ON MOTOR VEHICLES CLEAN, IN PARTICULAR COVERS FOR SENSORS OR CAMERAS
DISPOSITIF POUR NETTOYER DES ELEMENTS OPTIQUES DANS DES VEHICULES AUTOMOBILES, NOTAMMENT DES ELEMENTS DE RECOUVREMENT DE DETECTEURS OU DE CAMERAS

(30) Priorität: 11.03.2000 DE 10012004
(43) Veröffentlichungstag der Anmeldung: 18.12.2002
(73) Patentinhaber: ROBERT BOSCH GMBH, 70442 Stuttgart (DE)
(72) Erfinder: HOETZER, Dieter, 71701 Schwieberdingen (DE); BREIDER, Dominique, CH-1112 Echichens (CH)
(86) Internationale Anmeldenummer: PCT/DE2001/000865
(87) Internationale Veröffentlichungsnummer: WO 2001/068425

(56) Entgegenhaltungen:
- EP-A- 0 550 397
- EP-A- 0 761 500
- DE-A- 2 502 389
- DE-A- 2 613 988
- US-A- 4 200 327
- US-A- 5 096 287
- US-A- 5 385 612
- US-A- 5 657 929
- PATENT ABSTRACTS OF JAPAN vol. 007, no. 153 (M-226), 5. Juli 1983 (1983-07-05) & JP 58 061047 A (HIDENORI HORIBA), 11. April 1983 (1983-04-11)

## Beschreibung

### Stand der Technik

Die Erfindung geht aus von einer Einrichtung zum Sauberhalten optischer Elemente in Kraftfahrzeugen, insbesondere von Sensor- oder Kamera-Abdeckungen, der im Oberbegriff des Anspruchs 1 definierten Gattung.

In zunehmendem Maße werden in zukünftigen Kraftfahrzeugen vermehrt optische Sensoren oder Kameras eingesetzt, die der Verschmutzung durch die Umgebungsatmosphäre ausgesetzt sind. Bereits heute sind in manchen Fahrzeugen, insbesondere in Lastwagen oder in Omnibussen, Kamerasysteme installiert, die dem Fahrer beim Rangieren helfen. Solche Außenkameras bzw. die nach außen hin die Kameras abdeckenden transparenten Abdeckungen sind der Verschmutzung durch Schmutzpartikel, der Beeinträchtigung durch Eis, Reif und Schnee ausgesetzt. Sensoren und Kameras sind außerdem in ihrer optischen Wirksamkeit durch Flüssigkeitsbesatz, wie insbesondere Tau oder Regen, beeinträchtigt. Dieses Problem der Verschmutzung und ganz allgemein gesprochen der Beeinträchtigung der optischen Durchlässigkeit der transparenten Abdeckung gilt auch für optische Sensoren, die beispielsweise die Fahrbahn vor dem Kraftfahrzeug beobachten, um eine automatische Leuchtweitenregelung so zu beeinflussen, dass die Fahrbahn vor dem Kraftfahrzeug zum einen optimal ausgeleuchtet ist und zum anderen die Blendung entgegenkommender Fahrzeuge vermieden ist.

Bei solchen transparenten Abdeckungen, die optische Sensoren oder optische Kameras nach außen hin gegen die Umgebungsatmosphäre abdecken, besteht also das Problem darin, dass diese in einen möglichst die optische Transparenz der Abdeckung nicht beeinträchtigenden Zustand gehalten werden müssen. Dazu muss die Abdeckung sauber sein bzw. sauber gehalten werden und sie muss im allgemeinen auch trocken sein.

Aus der deutschen Offenlegungssschrift DE-A-26 13 988, als nächstkommendem Stand der Technik ist eine pneumatische Fördereinrichtung zum Reinhalten von Windschutzscheiben bzw. Scheinwerfern von Kraftfahrzeugen bekannt.

Daraus ergibt sich die Aufgabe vorliegender Erfindung darin, transparente Abdeckungen von Sensoren und Kameras besser sauber bzw. trocken zu halten.

### Vorteile der Erfindung

Die erfindungsgemässe Einrichtung zum Sauberhalten optischer Elemente in Kraftfahrzeugen, insbesondere von Sensor- oder Kamera Abdeckungen, mit den kennzeichnenden Merkmalen des Anspruchs 1 stellt in vorteilhafter Weise sicher, dass die Abdeckung der Sensoren bzw. der Kamera während des gesamten Fahrzeugbetriebs in sauberem und trockenen Zustand ist. Dadurch wird die Wirksamkeit des Sensors bzw. der Kamera auf vorteilhafte und einfache Weise sichergestellt.

Bei der Einrichtung nach der Erfindung wird dazu die transparente Abdeckung mit gezieltem Gas-, insbesondere Luftstrom, derart beaufschlagt, dass bei Bewegung der Abdeckung relativ zur Umgebung keine Umgebungsatmosphäre, insbesondere Umgebungsluft, die Oberfläche der Abdeckung erreicht.

Es ist vorgesehen, dass eine im Wesentlichen senkrecht von der transparenten Abdeckung hervorstehende Abschirmung vorgesehen ist, welche die transparente Abdeckung in etwa ringförmig umschliesst und einen Stauraum vor der Oberfläche der Abdeckung bildet. Dadurch kann der Querluftstrom durch den gebildeten Stauraum für die Gasatmosphäre wirkungsvoll unterstützt werden, um Verschmutzung und Regen von der Oberfläche der Abdeckung fernzuhalten.

Durch die in den weiteren Ansprüchen niedergelegten Maßnahmen, sind vorteilhafte Weiterbildungen und Verbesserungen der im Anspruch 1 angegebenen Einrichtung möglich.

Nach einer besonders zweckmäßigen Weiterbildung der Erfindung wird die Abdeckung mit einem Querluftstrom beaufschlagt, dessen Richtung im Wesentlichen parallel zur Oberfläche der Abdeckung ist. Vorteilhafterweise wird dieser Querluft- bzw. Quergasstrom mittels zumindest einer Düse erzeugt, aus der Druckluft zugeführt wird, deren Druck gegebenenfalls konstant oder variabel ist.

In vorteilhafter Ausbildung der Erfindung kann die transparente Abdeckung Teil einer Linse des optischen Elementes, wie insbesondere eines optischen Sensors oder einer optischen Kamera, sein oder sie ist ein besonderes Teil, das vor der Linse als separates Teil angeordnet ist. Diese Ausführungsformen ermöglichen eine sehr flexible Anpassung an verschiedene Gegebenheiten.

Die vorstehend gemäß der Erfindung beschriebenen Maßnahmen wirken besonders vorteilhaft, wenn das Fahrzeug mit der transparenten Abdeckung in Bewegung ist. Es kann jedoch vorkommen, dass bei längerem Stillstand die Abdeckung durch vorbeifahrende Fahrzeuge oder durch besondere Witterungsbedingungen trotzdem verschmutzt. Um für diese Situationen auch eine Säuberung der Abdeckung vornehmen zu können, ist entsprechend einer besonders vorteilhaften und zweckmäßigen weiteren Ausgestaltung der Erfindung vorgesehen, dass zumindest eine Flüssigkeitspritzdüse zum Reinigen der Oberfläche der Abdeckung vorgesehen ist.

In weiterer vorteilhafter Ausgestaltung der Erfindung ist vorgesehen, dass an oder in der Abdeckung eine Heizung, vorzugsweise eine elektrische Heizung, vorgesehen ist. Auf diese Weise können Eisbildungen oder Reifbildungen vermieden oder möglichst rasch und effektiv beseitigt werden. Alternativ dazu oder auch in Ergänzung dazu kann nach einer weiteren vorteilhaften Ausgestaltung der Erfindung eine Heizung für die Gas- bzw. Luftzuführung und/oder eine Heizung für die Reinigungsflüssigkeit vorgesehen sein.

In weiterer Ausgestaltung der Erfindung ist eine Steuerung vorgesehen, welche die Gas- bzw. Luftzuführung, gegebenenfalls die Flüssigkeitszufuhr und/oder gegebenenfalls die Heizung bedarfsgerecht betätigt.

In weiterer vorteilhafter Ausgestaltung der erfindungsgemäßen Einrichtung ist ein Kompressor vorgesehen, der zur Generierung und Erzeugung von genügend hohem Gas-, insbesondere Luftdruck, für die Erzeugung eines ausreichenden Quergas- bzw. Querluftstromes zum Freiblasen der Oberfläche der transparenten Abdeckung von Fremdkörpern und gegebenenfalls Reinigungsflüssigkeit oder sonstiger fester oder flüssiger Teile, welche die optische Durchlässigkeit der transparenten Abdeckung beeinträchtigen.

### Zeichnung

Die Erfindung ist anhand von in der Zeichnung dargestellten Ausführungsbeispielen in der nachfolgenden Beschreibung näher erläutert. Die Figuren zeigen im Einzelnen:
- Fig. 1: schematisch in Seitenansicht eine erste Ausführungsform der Einrichtung mit einer parallel zur Oberfläche der Abdeckung angeordneten Düse;
- Fig. 2: eine Anordnung ähnlich der von Fig. 1, bei der die Abdeckung linsenförmig gestaltet ist und der dahinter befindliche Sensor keine derartige Linse aufweist;
- Fig. 3: schematisch in Seitenansicht eine Anordnung wie in Fig. 1 jedoch mit einem zusätzlichen Formteil, das die von der Düse erzeugte Querströmung bei Bewegung der Abdeckung unterstützt;
- Fig. 4: eine Anordnung ähnlich der von Fig. 3, bei der die Abdeckung linsenförmig gestaltet ist und der dahinter befindliche Sensor keine derartige Linse aufweist;
- Fig. 5: eine Ausführungsform der erfindungsgemäßen Anordnung in schematischer Seitenansicht mit einer im Wesentlichen ringförmig gestalteten von der Abdeckung hervorstehenden Abschirmung, an deren Boden in der Nähe der Oberfläche der Abdeckung die Querstrom-Düse angeordnet ist;
- Fig. 6: eine Anordnung ähnlich der von Fig. 5, bei der die Abdeckung linsenförmig gestaltet ist und der dahinter befindliche Sensor keine derartige Linse aufweist, und
- Fig. 7: schematisch in Seitenansicht und Blockdarstellung die Anordnung einer beheizbaren Abdeckung eines Sensors oder einer Kamera und die Steuerung samt Flüssigkeitszuführdüse und Luftdüse.

### Beschreibung der Ausführungsbeispiele

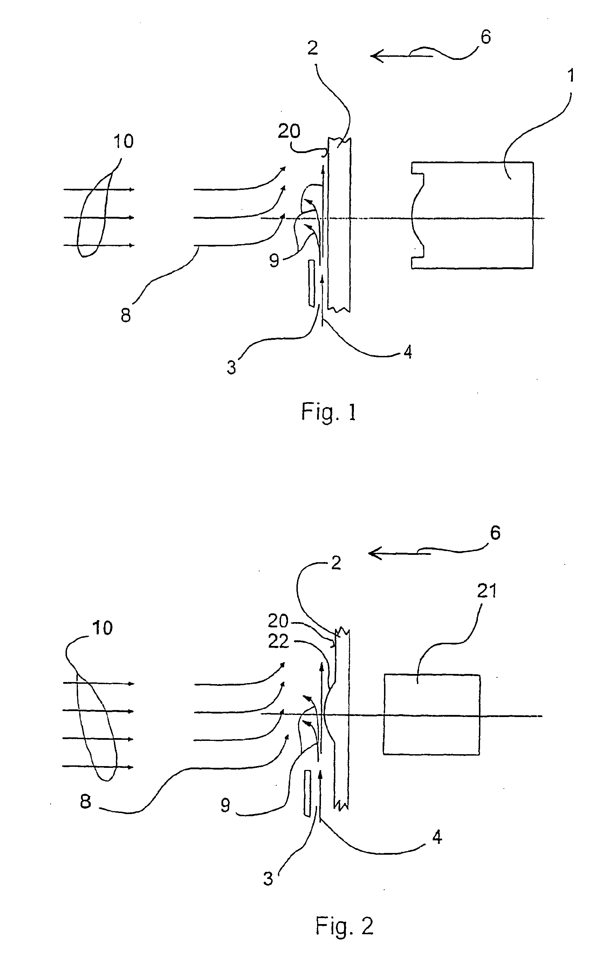

Die Ausführungsbeispiele gemäß den Figuren 1 bis 4 und 7 sind keine Ausführungsformen der Erfindung, sondern Beispiele, die das Verständnis der Erfindung erleichtern.

In Fig. 1 ist ein erstes Ausführungsbeispiel schematisch in Seitenansicht dargestellt. Ein optisches Element 1, welches ein optischer Sensor oder eine Kamera sein kann, wird durch eine transparente Abdeckung 2 gegenüber der Umgebungsatmosphäre 10 abgeschottet. Optisches Element 1 und Abdeckung 2 bewegen sich, wenn sie beispielsweise Teil eines Kraftfahrzeuges sind, in Richtung des Pfeiles 6, so dass die Umgebungsatmosphäre 10 in Richtung auf die Abdeckung 2 bewegt wird und dort an der Oberfläche 20 Verschmutzungen verursachen kann. Die transparente Abdeckung 2 wird derart mit einem gezielten Gas-, insbesondere Luftstrom, beaufschlagt, dass bei Bewegung der Abdeckung 2 zusammen mit dem optischen Element 1 in Richtung des Pfeiles 6, also relativ zur Umgebung, keine Umgebungsatmosphäre 10 direkt die Oberfläche 20 der Abdeckung 2 erreicht. Gemäß dem Ausführungsbeispiel von Fig. 1 ist dazu in der Nähe der Abdeckung 2 zumindest eine Düse 3 vorgesehen, durch die ein Gas- bzw. Luftstrom 4 mit konstantem oder variablen Druck Gas- bzw. Luft zugeführt wird. Die Richtung der Düse 3 und des Luftstroms 4 ist so gewählt, dass sich ein Querluftstrom 9 ergibt, der im Wesentlichen parallel zur Oberfläche 20 der Abdeckung 2 strömt und auch die anströmende Umgebungsluft, dargestellt durch das Bezugszeichen 8 und die entsprechenden Pfeile, umlenkt in Richtung des Querluftstroms 9. Auf diese Weise wird effektiv die transparente Abdeckung 2 von der verschmutzten und verschmutzenden Umweltatmosphäre 10 freigehalten, so dass die optischen Eigenschaften des optischen Elements 1 nicht durch Verschmutzung der transparenten Abdeckung 2 oder dort auftreffenden Regen beeinträchtigt werden.

Das in Fig. 2 dargestellte Ausführungsbeispiel entspricht demjenigen von Fig. 1 im Wesentlichen. Anders ist hier die Tatsache, dass der Sensor 21 ohne Linsenform in Richtung auf die Abdeckung 2 ausgestaltet ist und die entsprechende Linse in die Abdeckung 2 verlegt worden ist. Diese Ausgestaltung ergibt also eine Oberfläche 22 in Linsenform bei der transparenten Abdeckung 2 von Fig. 2. Wirkungsmäßig ist ansonsten diese genauso wie bei dem in Fig. 1 dargestellten Ausführungsbeispiel.

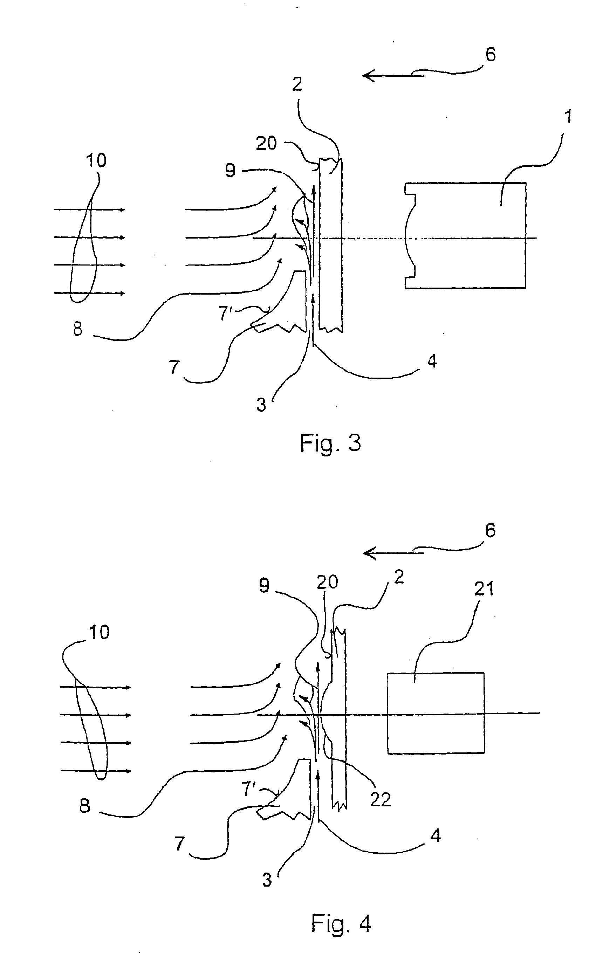

Das in Fig. 3 dargestellte Ausführungsbeispiel entspricht im Wesentlichen dem von Fig. 1, und das in Fig. 4 dem von Fig. 2, jedoch ist hier zur Unterstützung des durch die Düse 3 erzeugten Luftstroms 4 ein zusätzliches Formteil 7 vorgesehen, das eine Oberfläche 7' aufweist, welche den senkrecht zur Abdeckung 2 anströmenden Luftstrom 8 in Richtung des Luftstromes 4 umleitet. Durch dieses Formteil 7, das vor der transparenten Abdeckung 2 und vor der oder den Düsen 3 angebracht ist, wird dann, wenn sich die transparente Abdeckung 2 zusammen mit dem optischen Element 1 in Richtung des Pfeiles 6 relativ zur Umgebungsatmosphäre 10 bewegt, der durch die Düse 3 erzeugte Luftstrom 4 wirkungsvoll entlastet, so dass der Druck der Druckluft, die durch die Düse 3 zugeführt werden muss, verringert werden kann. Den Druck kann man auch variabel in Abhängigkeit von der relativen Geschwindigkeit zwischen Abdeckung 2 und Umgebungsatmosphäre 10 gestalten. Beim Ausführungsbeispiel gemäß Fig. 4 ist die Abdeckung 2 mit einer Linse 22 ausgestattet, entsprechend dem Ausführungsbeispiel von Fig. 2, und das optische Element 21 weist in Richtung auf die Abdeckung 2 hin kein Linsenteil auf.

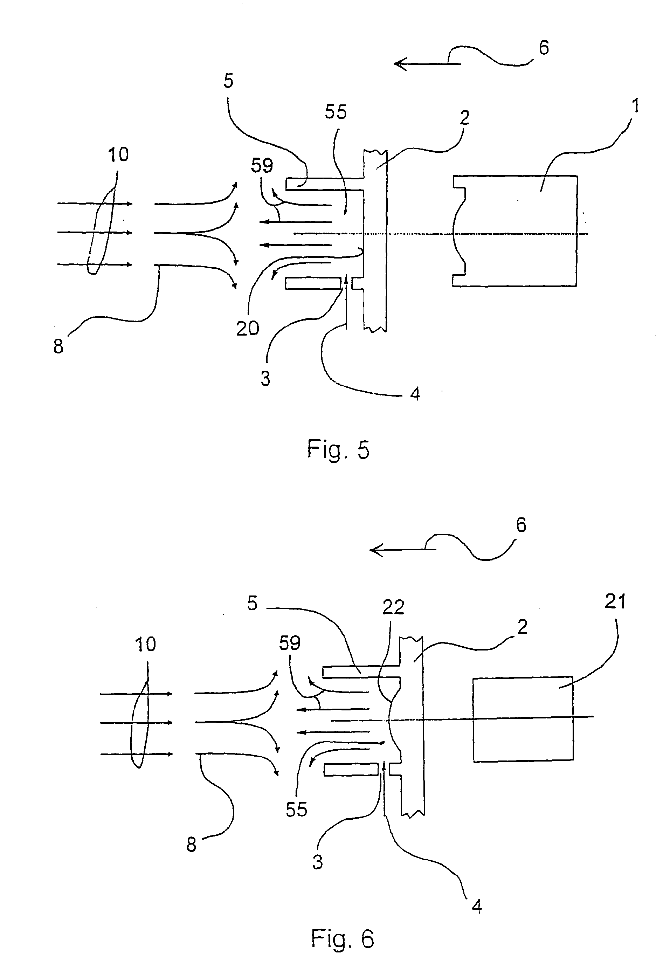

Im Ausführungsbeispiel gemäß Fig. 5 ist die Abdeckung 2 im Bereich vor dem optischen Element 1 mit einer im Wesentlichen ringförmigen Abschirmung 5 versehen. Diese Abschirmung 5 umgibt die wesentliche Fläche, die der Verschmutzung durch die Umgebungsatmosphäre 10 ausgesetzt ist, ringförmig und bildet durch ihre Formgebung einen Stauraum 55 vor der Oberfläche 20 der transparenten Abdeckung 2. Durch die Düse 3 eintretende Druckluft erzeugt mit dem Luftstrom 4 den Querluftstrom 9 jedoch mit der Maßgabe in diesem Fall, dass die Luft nicht ganz quer abströmt, sondern nach vorne herausgedrückt wird und die Wirkung des Stauraumes 55 in der Weise unterstützt, dass ein Gegenluftstrom 59 erzeugt wird, der die anströmende Umgebungsluft entsprechend den Pfeilen 8 ablenkt. Auch dadurch wird wirkungsvoll verhindert, dass Umgebungsatmosphäre 10 auf die Oberfläche 20 der Abdeckung 2 gelangen kann. In der Darstellung der Fig. 5 ist in der Nähe der Oberfläche 20 der Abdeckung 2 eine Düse 3 dargestellt. Es ist klar, dass mehrere Düsen verteilt um den stauraum 55 herum in der ringförmigen Abdeckung 5 vorgesehen sein können, um ein wirkungsvolles Gegenpolster aus Luft bzw. Gas vor der anströmenden Umgebungsatmosphäre 10 aufzubauen. Die Abschirmung 5 kann mit der Abdeckung 2 als ein Teil ausgeführt sein oder auf irgendeine bekannte und geeignete Weise mit der Abdeckung verbunden sein.

Das in Fig. 6 dargestellte Ausführungsbeispiel entspricht demjenigen von Fig. 5 im Wesentlichen. Anders ist hier die Tatsache, dass der Sensor 21 ohne Linsenform in Richtung auf die Abdeckung 2 hin ausgestaltet ist und die entsprechende Linse in die Abdeckung 2 verlegt worden ist. Diese Ausgestaltung ergibt also eine Oberfläche 22 in Linsenform bei der transparenten Abdeckung 2 von Fig. 4. Wirkungsmäßig ist ansonsten hier die Erfindung genauso wie bei der in Fig. 5 mit den Stauraum 55 vor der linsenförmigen Oberfläche 22 mit der Abdeckung 2.

Mit den Ausführungsbeispielen der Fig. 2,4 und 6 wird dargestellt, dass die transparente Abdeckung 2 mit einer Linse 22 ausgestattet ist, so dass das optische Element 21 selbst ohne Linse ist. Bei den Ausführungsbeispielen entsprechend den Figuren1, 3 und 5 ist die Abdeckung 2 ein besonderes Teil, das vor der Linse als separates Teil angeordnet ist, wobei dann das optische Element1 selbst mit einer Linse oder ähnlichem ausgestattet ist. Der linsenförmig gestaltete Teil 22 der Oberfläche 20 der transparenten Abdeckung, wie in Fig. 2,4 und 6 dargestellt, kann irgendein optisches Element sein, wie z. B. eine Linse, eine diffraktive Optik, eine holographische Optik, Facetten, Prismen oder ähnliches. Dies gilt sinngemäß auch für die entsprechend gestaltet Oberfläche des Elements1 in den Fig. 1, 3 und 5.

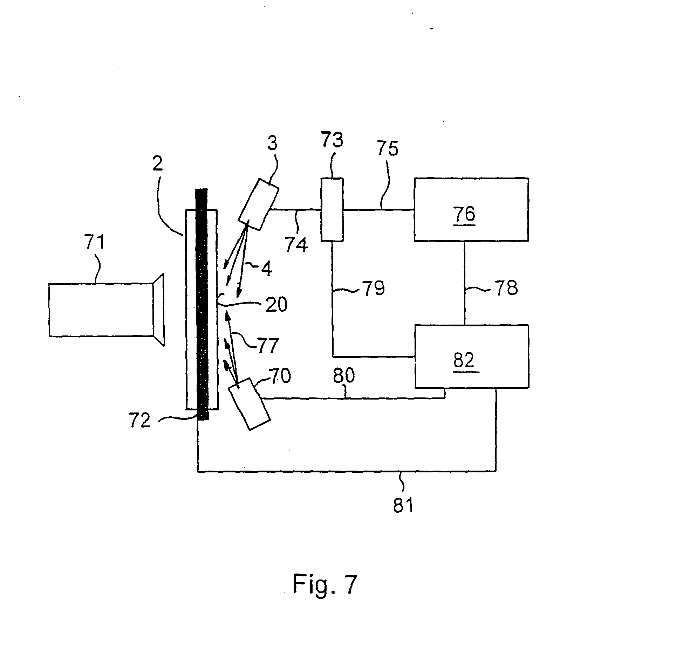

Das Ausführungsbeispiel gemäß der Figur 7 ist für sich keine Ausführungsform der Erfindung, sondern das Ausführungsbeispiel dient zum Verständnis der nachfolgend aufgeführten Varianten der Erfindung. In einer ersten Variante ist zusätzlich zumindest eine Flüssigkeitsspritzdüse (70) zum Reinigen der Oberfläche (20) der Abdeckung (2) vorgesehen. Hierzu alternativ oder zusätzlich ist in einer weiteren Variante an oder in der Abdeckung (2) eine Heizung (72), vorzugsweise eine elektrische Heizung, vorgesehen. Hierzu alternativ oder zusätzlich ist in einer weiteren Variante eine Heizung für die Gas- bzw. Luftzuführung und/oder eine Heizung für die Reinigungsflüssigkeit vorgesehen. Hierzu alternativ oder zusätzlich ist in einer weiteren Variante eine Steuerung (82) vorgesehen, welche die Gas- bzw. Luftzuführung (4, 74), gegebenenfalls die Flüssigkeitszufuhr (70) und/oder gegebenenfalls die Heizung (72) bedarfsgerecht betätigt. Hierzu ist alternativ oder zusätzlich in einer weiteren Variante ein Kompressor (76) vorgesehen, zur Generierung und Erzeugung von genügend hohem Gas-, insbesondere Luftdruck, für die Erzeugung eines ausreichenden Gas- bzw. Luftstromes (4) zum Freiblasen der Oberfläche (20, 22) der transparenten Abdeckung (2) von Fremdkörpern und gegebenenfalls von Reinigungsflüssigkeit oder von sonstigen festen oder flüssigen Teilen, welche die optische Durchlässigkeit der transparenten Abdeckung (2) beeinträchtigen.

Gemäß Figur 7 kann als optisches Element 1 hier beispielsweise eine Kamera 71 durch eine transparente Abdeckung 2, die durch eine Glasscheibe realisiert sein kann, die zu beobachtende Umgebung aufnehmen. Neben der den Querluftstrom 4 erzeugenden Luftdüse 3 ist hier zusätzlich eine Flüssigkeitspritzdüse 70 vorgesehen, mit der Reinigungsflüssigkeit in Richtung der Pfeile 77 auf die Oberfläche 20 der Abdeckung 2 gesprüht werden kann, um diese damit zu reinigen. Zur Vermeidung von Vereisungen kann in die Abdeckung 2 beispielsweise auch eine Heizschicht 72 eingebaut werden, um diese aufzutauen, wobei dann durch die Luftdüse 3 die störenden Flüssigkeitstropfen abgeblasen werden und die Oberfläche 20 somit getrocknet wird. Selbstverständlich kann die Heizschicht 72 auch an der transparenten Abdeckung 2, insbesondere auf deren Oberfläche 20, vorgesehen sein. Diese Heizschicht bzw. allgemeiner gesagt Heizung 72 wird vorzugsweise elektrisch betrieben. Zum Freiblasen der Oberfläche 20 von Flüssigkeitstropfen wird der Düse 3 über eine Leitung 74 Druckluft von einem Ventil 73 zugeführt, das seinerseits über eine Leitung 75 mit einem Kompressor 76 in Verbindung steht. Der Behälter für Wasser oder Reinigungsflüssigkeit zur Bedienung der Flüssigkeitsdüse 70 ist nicht dargestellt. Es ist eine Steuerung 82 vorgesehen, die über Steuerungsleitungen 73 mit dem Kompressor 76, 79 mit dem Ventil 73, 80 mit der Flüssigkeitszuführungsdüse 70 und 81 mit der Heizung 72 in Verbindung steht.

Alternativ zu der Heizung 72, die an oder in der transparenten Abdeckung 2 als Schicht vorgesehen sein kann, oder gegebenenfalls auch in Ergänzung dazu, kann gemäß einer weiteren vorteilhaften Ausgestaltung der Erfindung eine Heizung für die Gas- bzw. Luftzuführung und/oder eine Heizung für die Reinigungsflüssigkeit vorgesehen sein. Diese Heizung für die Erwärmung von zugeführtem Gas bzw. zugeführter Luft sowie aufgesprühter Reinigungsflüssigkeit ist in den Figuren nicht dargestellt.

Neben der vorteilhaften Erzeugung des Querluftstromes 4 gemäß Fig. 7 kommt hier noch die Möglichkeit hinzu, dass durch die Zuführung von Reinigungsflüssigkeit durch die Düse 70 die Oberfläche 20 der Abdeckung 2 für den Fall, dass sie doch, beispielsweise bei Stehen des Fahrzeuges, verschmutzt worden ist, gereinigt werden kann. Die dabei dann verbleibenden Wasserablagerungen werden durch die über die Düse 3 zugeführte Druckluft entfernt. Bei kalten Temperaturen kann es zur vereisung der Abdeckung 2 kommen. Um auch in dieser Situation eine klare Sicht für die als optisches Element eingesetzte Kamera 71 zur Verfügung zu stellen, wird die Abdeckung 2 durch die vorzugsweise elektrische Heizung 72 beheizt und/oder durch die vorgeheizte Reinigungsflüssigkeit und/oder Druckluft so erwärmt, dass Vereisungen verschwinden. Die beim Abtauen entstehenden Flüssigkeitstropfen werden mittels der mit der Luftdüse 3 zugeführten Luftstrom 4 und dem somit erzeugten Querluftstrom entfernt.

Mittels der Steuerung 82 wird die Gas- bzw. Luftzuführung und gegebenenfalls die Flüssigkeitszuführung zur Reinigungsdüse 70 sowie die Einschaltung und Ausschaltung der Heizung 72 bedarfsgerecht geregelt. Der Kompressor 76 dient zur Generierung und Erzeugung von genügend hohem Gas- bzw. Luftdruck, damit ein ausreichend starker Quergas- bzw. Querluftstrom zum Freiblasen der Oberfläche 20 bzw. 22 der Abdeckung 2 zur Verfügung steht. Damit wird in wirkungsvoller Weise die transparente Abdeckung 2 von Fremdkörpern und gegebenenfalls Reinigungsflüssigkeit sowie von sonstigen festen oder flüssigen Teilen, welche die optische Durchlässigkeit der transparenten Abdeckung 2 beeinträchtigen, freigehalten bzw. freigeblasen und getrocknet.

Durch die Erfindung wird in vorteilhafter Weise eine Einrichtung zur Verfügung gestellt, welche die transparente Abdeckung optischer Elemente, wie insbesondere von Sensoren oder Kameras, sauber hält bzw. in der Lage ist sie zu säubern, so dass die optische Empfindlichkeit der abgedeckten Elemente nicht beeinträchtigt wird.

## Patentansprüche

1. Einrichtung zum Sauberhalten optischer Elemente (1) in Kraftfahrzeugen, insbesondere von Sensor- oder Kamera-Abdeckungen, wobei die transparente Abdeckung (2) mit gezieltem Gas- (4, 9), insbesondere Luftstrom, derart beaufschlagt wird, dass bei Bewegung (6) der Abdeckung (2) relativ zur Umgebung keine Umgebungsathmosphäre (10), insbesondere Umgebungsluft, die Oberfläche (20, 22) der Abdeckung (2) erreicht,
**dadurch gekennzeichnet, dass**
eine im wesentlichen senkrecht von der Abdeckung (2) hervorstehende Abschirmung (5) vorgesehen ist, welche die transparente Abdeckung (2) in etwa ringförmig umschliesst und einen Stauraum (55) vor der Oberfläche (20, 22) der Abdeckung (2) bildet.

2. Einrichtung nach Anspruch 1, **dadurch gekennzeichnet, dass** die Abdeckung (2) mit einem Querluftstrom (9) beaufschlagt wird, dessen Richtung im wesentlichen parallel zur Oberfläche (20, 22) der Abdeckung (2) ist.

3. Einrichtung nach Anspruch 2, **dadurch gekennzeichnet, dass** der Querluftstrom (9) mittels zumindest einer Düse (3) erzeugt wird, aus der Druckluft (4) zugeführt wird, deren Druck konstant oder variabel ist.

4. Einrichtung nach einem der vorigen Ansprüche, **dadurch gekennzeichnet, dass** die transparente Abdeckung (2) Teil einer Linse des optischen Elementes (1), wie insbesondere eines optischen Sensors (1) oder einer optischen Kamera, ist oder ein besonderes Teil, das vor der Linse als separates Teil angeordnet ist.

5. Einrichtung nach einem der vorigen Ansprüche, **dadurch gekennzeichnet, dass** zumindest eine Flüssigkeitsspritzdüse zum Reinigen der Oberfläche (20) der Abdeckung (2) vorgesehen ist.

6. Einrichtung nach einem der vorigen Ansprüche, **dadurch gekennzeichnet, dass** an oder in der Abdeckung (2) eine Heizung, vorzugsweise eine elektrische Heizung, vorgesehen ist.

7. Einrichtung nach einem der vorigen Ansprüche, **dadurch gekennzeichnet, dass** eine Heizung für die Gas- bzw. Luftzuführung und/oder eine Heizung für die Reinigungsflüssigkeit vorgesehen ist.

8. Einrichtung nach einem der vorigen Ansprüche, **dadurch gekennzeichnet, dass** eine Steuerung vorgesehen ist, welche die Gas- bzw. Luftzuführung (4), gegebenenfalls die Flüssigkeitszufuhr und/oder gegebenenfalls die Heizung bedarfsgerecht betätigt.

9. Einrichtung nach einem der vorigen Ansprüche, **dadurch gekennzeichnet, dass** ein Kompressor vorgesehen ist, zur Generierung und Erzeugung von genügend hohem Gas-, insbesondere Luftdruck, für die Erzeugung eines ausreichenden Gas- bzw. Luftstromes (4) zum Freiblasen der Oberfläche (20, 22) der transparenten Abdeckung (2) von Fremdkörpern und gegebenenfalls von Reinigungsflüssigkeit oder von sonstigen festen oder flüssigen Teilen, welche die optische Durchlässigkeit der transparenten Abdeckung (2) beeinträchtigen.

## Claims

1. Device for keeping optical elements (1) in motor vehicles clean, in particular covers for sensors or cameras, a targeted gas flow (4, 9), in particular air flow, being applied to the transparent cover (2) in such a way that in the event of movement (6) of the cover (2) relative to the surroundings no ambient atmosphere (10), in particular no ambient air, reaches the surface (20, 22) of the cover (2),
**characterized in that** provided in a fashion projecting substantially perpendicularly from the cover (2) is a shield (5) which surrounds the transparent cover (2) in an approximately annular fashion and forms a baffle space (55) in front of the surface (20, 22) of the cover (2).

2. Device according to Claim 1, **characterized in that** there is applied to the cover (2) a transverse air flow (9) whose direction is substantially parallel to the surface (20, 22) of the cover (2).

3. Device according to Claim 2, **characterized in that** the transverse air flow (9) is produced by means of at least one nozzle (3) from which there is fed compressed air (4) whose pressure is constant or variable.

4. Device according to one of the preceding claims, **characterized in that** the transparent cover (2) is part of a lens of the optical element (1), such as, in particular, an optical sensor (1) or an optical camera, or is a special part which is arranged in front of the lens as a separate part.

5. Device according to one of the preceding claims, **characterized in that** at least one liquid spray nozzle is provided for cleaning the surface (20) of the cover (2).

6. Device according to one of the preceding claims, **characterized in that** a heater, preferably an electric heater, is provided on or in the cover (2).

7. Device according to one of the preceding claims, **characterized in that** a heater is provided for feeding the gas or air, and/or a heater is provided for the cleaning liquid.

8. Device according to one of the preceding claims, **characterized in that** a control is provided which, on the basis of need, actuates the gas or air feed (4), if appropriate the liquid feed, and/or if appropriate the heater.

9. Device according to one of the preceding claims, **characterized in that** a compressor is provided for generating and producing a sufficiently high gas, in particular air, pressure for producing an adequate gas or air flow (4) for blowing the surface (20, 22) of the transparent cover (2) free of foreign bodies and, if appropriate, of cleaning liquid or of other solid or liquid parts which impair the optical transmission of the transparent cover (2).

## Revendications

1. Dispositif pour nettoyer des éléments optiques (1) dans des véhicules automobiles, notamment des éléments de recouvrement de détecteurs ou de caméras, selon lequel l'élément de recouvrement transparent (2) est exposé à un flux de gaz ciblé (4, 9), en particulier à un flux d'air, de sorte que lors du déplacement (6) de l'élément de recouvrement (2) par rapport à l'environnement, aucune atmosphère ambiante (10), notamment aucun air ambiant, n'atteint la surface (20, 22) de l'élément de recouvrement (2),
**caractérisé en ce que**
l'on prévoit un élément de protection (5), dépassant essentiellement de manière verticale de l'élément de recouvrement (2), qui entoure l'élément de recouvrement transparent (2) de façon approximativement circulaire et forme ainsi une zone de retenue (55) devant la surface (20, 22) de l'élément de recouvrement (2).

2. Dispositif selon la revendication 1,
**caractérisé en ce que**
l'élément de recouvrement (2) est exposé à un flux d'air transversal (9) dont la direction est essentiellement parallèle à la surface (20, 22) de l'élément de recouvrement (2).

3. Dispositif selon la revendication 2,
**caractérisé en ce que**
le flux d'air transversal (9) est produit à l'aide d'au moins une buse (3), à partir de laquelle est injecté de l'air comprimé (4) dont la pression est constante ou variable.

4. Dispositif selon l'une quelconque des revendications précédentes,
**caractérisé en ce que**
l'élément de recouvrement transparent (2) fait partie d'une lentille de l'élément optique (1), notamment d'un détecteur optique (1) ou d'une caméra optique, ou est une pièce particulière placée devant la lentille en tant que pièce indépendante.

5. Dispositif selon l'une quelconque des revendications précédentes,
**caractérisé par**
au moins une buse de pulvérisation de liquide pour nettoyer la surface (20) du couvercle (2).

6. Dispositif selon l'une quelconque des revendications précédentes,
**caractérisé par**
un système de chauffage, de préférence un système de chauffage électrique, sur ou dans le couvercle (2).

7. Dispositif selon l'une quelconque des revendications précédentes,
**caractérisé par**
un système de chauffage pour l'amenée de gaz ou d'air et/ou un système de chauffage pour le liquide de nettoyage.

8. Dispositif selon l'une quelconque des revendications précédentes,
**caractérisé par**
une commande actionnant, en fonction des besoins, l'amenée de gaz ou d'air (4), le cas échéant l'apport en liquide et/ou éventuellement le système de chauffage.

9. Dispositif selon l'une quelconque des revendications précédentes,
**caractérisé en ce qu'**
un compresseur permet de générer et produire une pression de gaz, et en particulier d'air, suffisamment élevée pour produire un flux de gaz ou d'air (4) suffisant pour débarrasser la surface (20, 22) du couvercle transparent (2) de tout corps étranger et, le cas échéant, de liquide de nettoyage ou de toute autre particule solide ou liquide, pouvant nuire à la transparence optique du couvercle transparent (2).
